# EUROPEAN PATENT APPLICATION

(11) **EP 2 290 507 A2**
(43) Date of publication of application: **02.03.2011**
(21) Application number: 10173698.1
(22) Date of filing: 23.08.2010
(51) Int. Cl.: G06F 3/041, G06F 3/038

(54) **Dynamic switching of interactive whiteboard data**

(30) Priority: 25.08.2009 GB 0914843
(71) Applicant: Promethean Limited, Blackburn Lancashire BB1 5TH (GB)
(72) Inventor: Pearce, NIgel, Blackburn, Lancashire BB1 5TH (GB); Burghgraeve, Pierre, Blackburn, Lancashire BB1 5TH (GB)
(74) Representative: Williams, David John

(57) **Abstract**

There is disclosed a method for controlling a computer system, which computer system is adapted to receive touch data and non-touch data, the method comprising the steps of: receiving input data from an interactive display surface; and selectively delivering the input data from the interactive display surface to an interface of an operating system of the computer system as either touch data or non-touch data.

## Description

### BACKGROUND TO THE INVENTION:

### Field of the Invention:

The present invention relates to a computer system which is adapted to receive inputs from an interactive touch-sensitive display surface, in an arrangement in which the computer system is connected to an interactive display system associated with a non-touch sensitive interactive surface input technology.

### Description of the Related Art:

Interactive display systems are well-known in the art. A typical example of an interactive display system is an electronic whiteboard system. An electronic whiteboard system is typically adapted to sense the position of a pointing device or pointer relative to a work surface (the work surface being an interactive display surface) of the whiteboard. When an image is displayed on the work surface of the whiteboard, and its position calibrated, the pointer can be used in the same way as a computer mouse to manipulate objects on the display by moving a pointer over the surface of the whiteboard.

A typical electronic whiteboard may utilise electromagnetic technology to sense the position of a pointing device on its surface. A wire grid may be embedded within the surface of the electronic whiteboard, and the pointing device may be provided with a resonant coil. Via known techniques, signals received at the wire grid from excitation of the coil in the pointing device can be used to determine the location of the pointing device on the surface.

Other technologies can be used for implementing electronic whiteboard systems. Electronic whiteboard systems are known which utilise: touch-sensitive technology, such as projected capacitance technology; pressure sensing technology; and camera technology.

A typical application of an interactive whiteboard system is in a teaching environment. The use of interactive whiteboard systems improve teaching productivity and also improve student comprehension. Such whiteboards also allow use to be made of good quality digital teaching materials, and allow data to be manipulated and presented using audio visual technologies.

A typical construction of an electronic whiteboard system comprises an interactive display forming the electronic whiteboard, a projector for projecting images onto the display, and a computer system in communication with the electronic whiteboard for generating the images for projection, running software applications associated with such images, and for processing data received from the display associated with pointer activity, such as the location of the pointer on the display surface. In this way the computer system controls the generation of images to take into account the detected movement of the pointer on the interactive surface, and the pointer effectively operates as a mouse to control software applications, including the operating system, running on the computer system.

Thus, in conventional electronic whiteboard systems, the input data detected at the board surface is processed by an associated computer system as mouse data, and used by the computer system to control software applications in the same way as data retrieved directly from a mouse input. In practice, the data received from the interactive whiteboard is combined with the data received from any conventional mouse input to the computer system and delivered to the operating system of the computer system.

More recent developments in operating systems have provided for support for inputs from touch devices, moreover touch devices that are capable of generating data from multiple touch points. Such operating systems support computer systems in which a touch-sensitive display may be provided, in combination with a mouse. The interface to the operating system is adapted to distinguish between input touch data and input mouse data. Thus a touch layer and a mouse layer is provided in the operating system, the touch layer processing touch data and the mouse layer processing mouse data. The touch layer can generate touch events and touch gestures which can be used by software at the application layer, in order to provide touch functionality, including in particular multi-touch functionality. Multi-touch functionality allows for various advantageous applications to be implemented, including simultaneous drawing, image zooming and rotating.

A conventional interactive whiteboard cannot be used to provide touch functionality for such an improved operating system, since the input data delivered from an interactive whiteboard is always treated as mouse data. One might consider a solution to this problem as being to convert all the data received from the interactive whiteboard surface into touch data. Whilst this is possible, it then removes the possibility of inputs at the interactive whiteboard being used to control mouse functionality, and therefore is undesirable.

It is an aim of the invention to provide improvements in a computer system adapted to receive inputs from both an interactive touch sensitive display and a mouse and process such inputs as touch data and mouse data respectively, in which an interactive whiteboard is provided to simulate a touch sensitive display.

### SUMMARY OF THE INVENTION:

In an aspect the invention provides a method for controlling a computer system, which computer system is adapted to receive touch data and non-touch data, the method comprising the steps of: receiving input data from an interactive display surface; and selectively delivering the input data from the interactive display surface to an interface of an operating system of the computer system as either touch data or non-touch data.

The method may include receiving inputs from an interactive touch sensitive display surface as touch data and receiving inputs from a further input device as non-touch data.

The method may include receiving data at a non-touch sensitive surface forming the interactive display surface.

The method may include the step of detecting the presence of a pointing device that includes a resonant coil utilising a wire grid included in the interactive surface.

The step of selectively delivering may be dependent upon a state of an input means at the interactive display surface.

The input means may be the pointing device, the state of the input means being defined by either or both of detecting the pointing device as present, and detecting the pointing device as being in contact with the surface.

If the pointing device is determined as present and being in contact with the surface the input data may be delivered as touch data, and if the pointing device is determined as present and not in contact with the surface the input data may be delivered as non-touch data.

The input data may be delivered as non-touch data further in dependence on the pointing device being present but not in contact with the surface for either a predetermined period of time, or for a range of movement exceeding a predetermined distance.

The input data may be delivered as touch data further in dependence on the pointing device contacting the surface within a predetermined period of time.

The step of selectively delivering may be dependent upon detecting the presence of a further input means, wherein if on detection of a further input means a selection has been made, that selection is maintained, and if a selection has not been made, the input data is delivered as touch data.

The step of selectively delivering may be dependent on the type of an application running under the control of the computer system and currently having the input focus of the computer system.

The invention provides a computer program for performing, when run on a computer, the method steps as defined. The invention provides a computer program product for storing computer program code which, when run on a computer, performs the defined method steps.

The invention further provides a computer system adapted to receive touch data and non-touch data, the system being further adapted to receive inputs from an interactive display surface, and selectively deliver the input data from the interactive display surface to an interface of an operating system of the computer system as either touch data or non-touch data.

The computer system may be further adapted to receive inputs from an interactive touch sensitive display surface as touch data and receive inputs from a further input device as non-touch data.

The interactive display surface may be adapted to receive data at a non-touch sensitive surface.

The interactive surface may include a wire grid, for detecting the presence of a pointing device that includes a resonant coil.

The computer system is further adapted such that the selective delivering is dependent upon a state of an input means at the interactive display surface.

The input means may be the pointing device, the state of the input means being defined by either or both of detecting the pointing device as present, and detecting the pointing device as being in contact with the surface.

If the pointing device is determined as present and being in contact with the surface the input data may be delivered as touch data, and if the pointing device is determined as present and not in contact with the surface the input data may be delivered as non-touch data.

The input data may be delivered as non-touch data further in dependence on the pointing device being present but not in contact with the surface for either a predetermined period of time, or for a range of movement exceeding a predetermined distance.

The input data may be delivered as touch data further in dependence on the pointing device contacting the surface within a predetermined period of time.

The computer system may be further adapted such that the selective delivering is dependent upon detecting the presence of a further input means, wherein if on detection of a further input means a selection has been made, that selection is maintained, and if a selection has not been made, the input data is delivered as touch data.

The computer may be further adapted such that the selective delivering is dependent on the type of an application running under the control of the computer system and currently having the input focus of the computer system.

In accordance with the invention an interactive display system comprises an electronic whiteboard and a computer system as defined.

The further input device is preferably a mouse input device. The non-touch data is preferably mouse data.

### BRIEF DESCRIPTION OF THE FIGURES:

The invention will now be described by way of example with reference to the accompanying figures, in which:
Figure 1 illustrates the architecture of a conventional electronic whiteboard system;
Figure 2 illustrates the architecture of a known computer system adapted to receive inputs from a touch-sensitive display surface;
Figure 3 illustrates the problem in a computer system adapted to receive inputs from a touch sensitive display surface, when an interactive whiteboard is used in place of a touch sensitive display surface;
Figure 4 illustrates the architecture of a computer system in accordance with a preferred embodiment of the invention, in which an interactive whiteboard is connected to the computer system to provide touch input data and mouse input data;
Figure 5 illustrates a flow chart for processing data received from an interactive whiteboard in accordance with a preferred embodiment of the invention to provide touch data and mouse data;
Figure 6 illustrates the functional blocks in a driver associated with the data received from an interactive whiteboard in accordance with the flow chart of Figure 5, to provide touch data and mouse data;
Figure 7 illustrates a flow chart for a process for determining whether input data received from the interactive whiteboard is to be processed as touch data or mouse data in accordance with a first embodiment; and
Figure 8 illustrates a table for determining whether input data from the interactive whiteboard is to be processed as touch data or mouse data in a second embodiment.

### DESCRIPTION OF THE PREFERRED EMBODIMENTS:

The invention is now described by way of reference to various examples, embodiments, and advantageous applications. One skilled in the art will appreciate that the invention is not limited to the details of any described example, embodiment or detail. In particular the invention is described with reference to an exemplary interactive display system and with reference to an exemplary computer system and associated operating system. One skilled in the art will appreciate that the principles of the invention are not limited to the specifics of any system or process described herein.

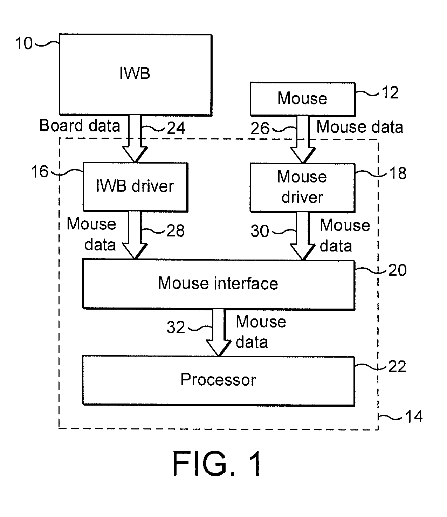

With reference to Figure 1, there is illustrated the architecture of a known interactive display system, including an interactive whiteboard generally designated by reference numeral 10, a computer system generally designated by reference numeral 14, and a mouse generally designated by reference numeral 12. As known in the art, the interactive whiteboard 10 and the mouse 12 provide inputs for the computer system 14. One skilled in the art will appreciate that other functional elements may be required in order to implement an interactive display system, in dependence upon the technology being used. For example one or more input pointing devices, known as "pens", may be provided for providing inputs at an interactive surface of the interactive whiteboard 10. A projector may be provided for projecting graphical images onto a display surface of the interactive whiteboard 10. However the invention and its various embodiments is not limited to any particular type of interactive whiteboard technology, nor to any particular type of computer system. The interactive whiteboard is preferably one utilising electromagnetic technology, with an underlying or embedded wire grid which cooperates with pointing devices including resonant coils, to detect inputs at an interactive surface thereof. Alternatively the interactive whiteboard may be implemented using other input detection technology, such as camera technology. Further although in preferred embodiments the interactive whiteboard is associated with a projector for projecting images onto its surface, other display technologies may be utilised, and the interactive whiteboard may, for example, be an emissive surface.

The computer system 14 includes an interactive whiteboard driver 16, a mouse driver 18, an interface 20, and a processor 22. The computer system 14 will, of course, as one skilled in the art will be aware of, associated with additional functional elements to provide the general operation of a computer system in combination with an associated operating system.

Input data detected at the interactive surface of the interactive whiteboard 10 is delivered as board data on data bus 24 to the interactive whiteboard driver 16. Mouse inputs from the mouse 12 are delivered as mouse data on data bus 26 to the mouse driver 18.

As is known in the art, the interactive whiteboard driver 16 converts the board data on bus 24 into mouse data, and delivers this on bus 28 to the interface 20. The conversion of the board data may involve adjusting the headers of data packets to include mouse packet identifiers, for example. Similarly the mouse driver 18 delivers the mouse data received from the mouse as mouse data on a bus 30 to the interface 20.

The interface 20 receives the mouse data on data buses 28 and 30 from the interactive whiteboard driver 16 and mouse driver 18 respectively, and delivers this on a data bus 32 as combined mouse data to the processor 22. The processor then operates to control the functionality of the computer system in accordance with the received mouse data.

The arrangement of Figure 1 is a typical arrangement in the prior art, and as can be understood from Figure 1 the processor, and the operating system associated with the processor, receives data which is simply identified as mouse data, and the processor and operating system are unaware of the source of the particular mouse data. In this way the mouse functionality of the computer/operating system can be controlled either through the interactive whiteboard 10 emulating a mouse or through the mouse 12.

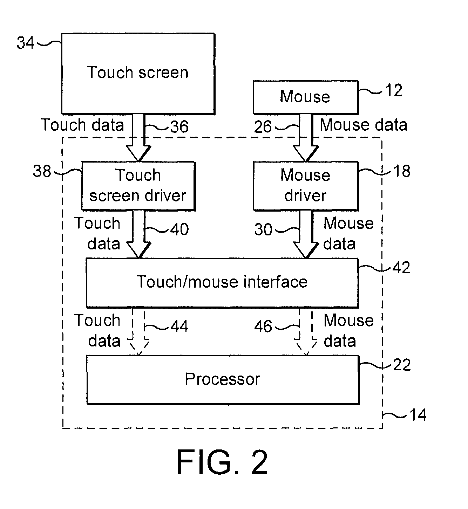

With regard to Figure 2, there is illustrated the architecture of a computer system, as known in the art, adapted to receive input data from a touch sensitive screen and a mouse. In Figure 2, and in all subsequent Figures, where elements illustrated in the Figures correspond to like elements in other Figures, the same reference numerals are used.

In Figure 2, the computer system 14 receives data inputs from a touch sensitive display screen (or more simply, a touch screen) 34, and the mouse 12. The input data from the mouse 12 is delivered to an interface 42, which corresponds to the interface 20 of Figure 1, via the mouse driver 18. Touch data is provided on a data bus 36 from the touch screen 34 to a touch screen driver 38. The touch data is then provided from the touch screen driver 38 to the interface 42 on a data bus 40.

Thus, the interface 42 receives touch data on data bus 40 and mouse data on data bus 30. The interface 42 is adapted to deliver both the touch data and the mouse data to the processor 22. As illustrated in Figure 2, the interface 42 presents the touch data on a data bus 44 to the processor 22, and the mouse data on a data bus 46 to the processor 22. However the invention is not concerned with the delivery of the touch data and mouse data to the processor (and the operating system). The delivery of the touch data and mouse data to the processor (and the operating system) is determined by the implementation of a given operating system, and is outside the scope of the present invention. One skilled in the art familiar with computer systems adapted to receive and process both touch data and mouse data will be familiar also with the processes by which the touch data and mouse data is delivered to the processor and operating system. Thus although Figure 2 shows an interface 42 which provides separate data streams for the touch data and mouse data to the processor, the touch data and mouse data may alternatively be interleaved in some manner, or delivered from the respective touch screen driver 38 and mouse driver 18 to the processor or operating system in accordance with the implementation of the implemented operating system.

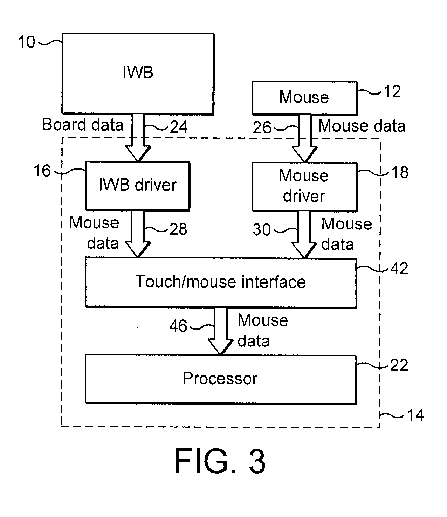

With reference to Figure 3, there is illustrated an architecture combining the architectures of Figures 1 and 2, namely where the interactive whiteboard 10 is connected to the computer system 14, where the computer system 14 is adapted to receive and process both touch data and mouse data. As can be seen in Figure 3, consistent with the arrangement of Figure 1 the interactive whiteboard driver 16 provides mouse data on the data bus 28 to the interface 42. The mouse driver 18 similarly delivers mouse data on data bus 30 to the interface 42. As described with reference to Figure 2, the interface 42 is adapted to receive touch and mouse data, and deliver touch and mouse data to the processor or operating system. However, in the arrangement of Figure 3 the interface 42 only receives mouse data, as the board data on data bus 24 from the interactive whiteboard 10 is converted by the interactive whiteboard driver 16 into mouse data in accordance with conventional techniques. Thus all data received from the interactive whiteboard 10 is treated as mouse data, and processed by the interface 42 as mouse data. Thus the processor and operating system only ever receive mouse data.

This is clearly disadvantageous in an arrangement in which the interactive whiteboard 10 is intended to emulate a touch sensitive surface. One can see that in order to address this problem, then the interactive whiteboard driver 16 may be adapted such that the board data received on data bus 24 is converted to touch data format, rather than mouse data format, on data bus 28. However the disadvantage of making such an adaptation to the interactive whiteboard driver 16 is that the capability for the interactive whiteboard 10 to be used to control mouse events is lost.

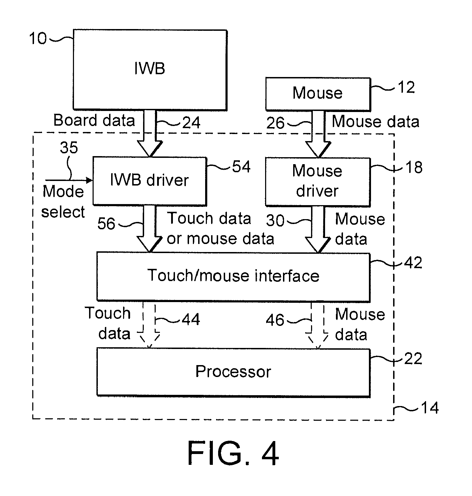

With reference to Figure 4, there is illustrated a modification to the architecture of the computer system in accordance with the preferred embodiment of the invention. With reference to Figure 4, the interactive whiteboard driver 16 of Figure 1 is replaced by a modified interactive whiteboard driver 54. The interactive whiteboard driver 54 receives the board data on data bus 24, and additionally receives a mode select control signal on a line 55. In accordance with the preferred embodiment of the invention, as described further hereinbelow, the interactive whiteboard driver 54 is adapted to generate, under control of the mode select signal on line 55, either touch data or mouse data on a data bus 56. The data bus 56 is connected to the interface 42. Consistent with the arrangement of Figure 2, the interface 42 then delivers touch data and mouse data on data buses 44 and 46 to the processor 22. The interface 42 delivers the touch and mouse data in accordance with the identification of such data received at its inputs from the interactive whiteboard driver 54 or the mouse driver 18.

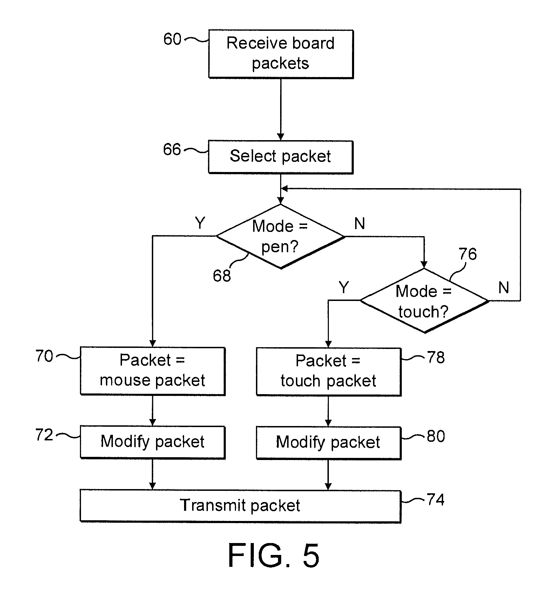

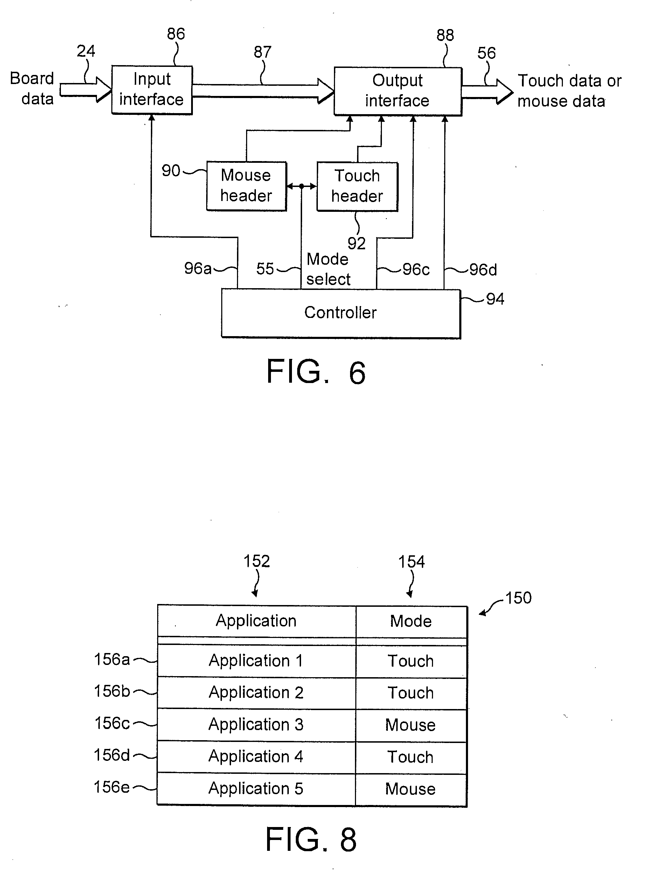

The principles of operation of the interactive whiteboard driver 54 of Figure 4 in accordance with the preferred embodiment of the invention are now described further with reference to the flow process of Figure 5 and the functional blocks of Figure 6. Figure 5 illustrates the flow process carried out at the interactive whiteboard driver 54, and Figure 6 illustrates the function elements provided in the computer system 14 to implement the flow process.

The functional elements of the control circuitry of Figure 6 include an input interface 86, an output interface 88, a controller 94, a mouse header block 90, and a touch header block 92.

As illustrated in Figure 5, in a step 60 the interactive whiteboard driver 54 receives board data on data bus 24, which data comprises a series of packets. The input interface 86 of Figure 6 provides an input interface for the receipt of the board data packets. As shown in Figure 6, the packets received at the input interface 86 are delivered on a data bus 87 to the output interface 88.

The controller 94 generates various control signals 96 which control the input interface 86, the output interface 88, the mouse header block 90, and the touch header block 92. The controller 94 also generates the mode select signal on line 55.

In a step 66, the controller 94 selects the current packet from the input interface 86. The controller 94 then determines, in a step 68, whether a current mode of operation is a pen mode.

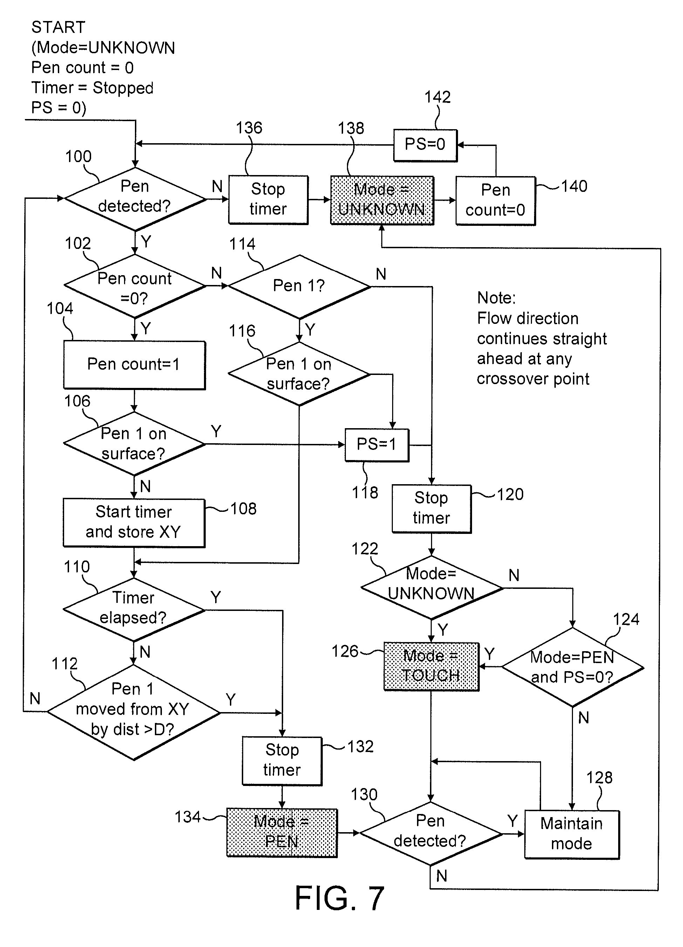

The interactive whiteboard driver 54 is controlled by the controller 94 to convert the board data on data bus 24 into either touch data or mouse data on data bus 56 in dependence upon whether a mode of operation is set to be pen mode or touch mode. When pen mode is set, the board data is converted to mouse data. When touch mode is set, the board data is converted to touch data. The determination of the mode of operation, in accordance with preferred embodiments of the invention, is described further hereinbelow with reference to Figures 7 and 8. Pen mode can be understood to be a mouse mode of operation.

If in step 68 it is determined by the controller 94 that a pen mode is set, then in step 70 it is determined to identify the current packet as a mouse packet. In a step 72 the packet is then modified. This may be achieved, for example, by attaching a mouse header from mouse header block 90 to the packet, or by setting a flag in the header of the packet. The mode select signal on line 55 may be set to indicate to the mouse header block 90 that the header of the current data packet should be appropriately adjusted.

In a step 74 the thus modified packet is then transmitted from the output interface 88. The packet is transferred from the output interface 88 on a data bus 56 as mouse data.

If in step 68 it is determined that the current mode of operation is not pen mode, then the process moves on to step 76 where it is determined whether the current mode of operation is touch mode. If it is determined in step 76 that the current mode of operation is not touch mode, then this means that a mode of operation has not been set, and the process returns to step 68.

If it is determined in step 76 that the mode of operation is touch mode, then in a step 78 it is determined that the current packet is to be identified as a touch packet. In a step 80 the current packet is then modified to be a touch packet. This may be achieved by controlling the touch header block 92 to add an appropriate header to the packet, or to modify the existing header such as by setting an appropriate flag value in the header.

In step 74 the thus modified packet is then output from the output interface 88 to the data bus 56 as touch data.

The format of the data packets output from the interactive whiteboard driver 54, as either touch data packets or mouse data packets, is outside the scope of the present invention. The format of the packets to identify their type as being either touch data or mouse data will be dependent upon the protocol implemented by the computer system or operating system.

Although in the described examples the mouse packets or touch packets output by the interactive whiteboard driver 54 are output on a single channel, represented by data bus 56, it is envisaged that in alternative arrangements, in accordance with alternative operating systems, the interactive whiteboard driver may have a dedicated touch data output channel and a dedicated mouse data output channel, and therefore rather than modifying any header or identifier associated with the data packets, the data packets may be directed, according to the decision made as to whether touch mode or pen mode is enabled, to the appropriate channel.

With further reference to Figure 5, after the transmission of the packet, as either a mouse packet or a touch packet, in step 74, the process returns to step 66 and is repeated for subsequent packets.

With reference to Figure 7, there is now illustrated a process flow in a preferred embodiment for determining the mode of operation of the interactive whiteboard driver 54.

The processor 22 monitors the board data on data bus 24 (via communication means not illustrated in the Figures) in order to determine the mode of operation of the interactive whiteboard driver 54. Initially, the mode of operation is assumed to either be unknown or not yet set. A 'pen count' value, PC, is set to zero, a 'pen on surface' value, PS, is set to zero, and a timer is in a stopped state.

In a step 100, it is determined whether a pen has been detected. In this step, the detection of the pen constitutes the detection of the pen at or near the surface of the board.

If no pen is detected in step 100, then in a step 136 the timer is stopped (if has been started). In a step 138 the mode of operation is set as unknown (if it has been set). In step 140 the pen count is set to zero (or retained as zero). In a step 142 the pen on surface value is set to zero (or retained at zero).

If in step 100 it is determined that a pen has been detected by the interactive surface, then the process moves on to step 102. In step 102 it is determined whether the current pen count value, PC, is equal to zero. On the assumption that no pens have yet been detected, then the pen count value, PC, will be zero. Thus the process moves on to step 104.

In step 104 the pen count value, PC, is set to be equal to one. In a step 106 it is then determined whether the detected pen, which is the first detected pen or only detected pen, is actually in contact with the surface. If the pen is not in contact with the surface, then in a step 108 a timer is started and the X-Y coordinates of the current position of the pen are stored. In a step 110 it is then determined whether the timer has elapsed. In the event that the timer has not elapsed in a step 112 it is determined whether the pen has moved by a threshold distance, denoted D, from the X-Y position at which it was originally detected.

If in either step 110 or step 112 the timer has elapsed or it is determined that the pen has moved by greater than the distance D, then in step 132 the timer is stopped and in step 134 the mode is set as pen mode.

If in step 112 it is determined that the pen has not moved by a distance greater than D, then the process returns to step 100.

If in step 102 it is determined that the pen count is not equal to zero, then the process moves on to a step 114. On the second cycle of steps 100 and 112 following the detection of the first pen, the pen count value PC will be equal to one in step 102, and therefore the process will move on to step 114. Similarly in the event of a second pen being detected in step 100, at step 102 the pen count will be detected as being non-zero. Thus the process will move on to step 114 also.

In step 114 a decision is made as to whether the pen that has been detected is the first pen. If it is determined that the pen that has been detected is the first pen, then in step 116 it is determined whether this pen is on the surface. If in step 116 it is determined that the pen is not on the surface, then the process reverts to step 110. Thus in the event that only one pen is presented at the interactive surface, and that pen does not contact the interactive surface, steps 100 to 112 are followed by steps 100, 102, 114, 116, 110 and 112, until either the timer is elapsed or the pen is moved by a distance greater than D, and then the pen mode is set.

If in step 116 it is determined that the first pen is on the surface, then the process moves to step 118. In step 118 the pen on surface value PS is set to be equal to one. In step 120 the timer is then stopped.

In step 122 it is determined whether the current mode of operation is known. If the current mode of operation is not known in step 122, then in step 126 the mode of operation is set to be touch mode.

If in step 122 the mode of operation is determined to be known, then in step 124 it is determined whether the mode of operation is pen mode, and whether the number of pens on the surface is zero. If these conditions are met, then in step 126 the mode is switched to touch mode. Otherwise in step 128 the current mode is maintained.

If in step 114 it is determined that the pen that has been detected is not the first pen, i.e. it is a second or subsequent pen, then this indicates the presence of multiple pens. The process then moves on to step 120, and the timer is stopped. Steps 122 and either 126 or 124 are then repeated.

Following the establishment of a pen mode in step 134, or the establishment of a touch mode in step 126, or the maintaining of a current mode (either pen mode or touch mode) in step 128, in a step 30 a determination is made as to whether a pen is detected. As long as a pen is detected, then the current mode of operation is maintained in step 128. If a pen is no longer detected (either on the surface or proximate to the surface), then the process moves to step 138 and the mode is set as unknown, and in steps 140 and 142 the pen count value and the pen on surface values are set to zero.

Thus it can be seen with reference to Figure 7 that there is presented a process flow which allows for determination of the mode of operation for the interactive whiteboard driver 54, in order to determine whether board data is converted to touch data or mouse data. The user can decide the mode of operation, either pen mode or touch mode, by the way in which they control the pen or pens. One of a number of triggers is used to determine the mode of operation.

It will be apparent from the flow process of Figure 7 that a number of different conditions can result in either pen mode or touch mode being set. These conditions include as follows:
1. From a condition of no pens detected, if the user brings a single pen directly onto the interactive surface quickly, this activates touch mode. This is represented by the sequence of steps 100-102-104-106-118-120-122-126. Touch mode is activated until no pens are detected in step 130.
2. From a condition of no pens detected, if the user brings a single pen into proximity of the surface, without touching the surface, for a predetermined period of time, this activates pen mode. This is represented by the sequence of steps 100-102-104-106-108-110-132-134. Pen mode is maintained until no pens are detected in step 130.
3. From a condition of no pens detected, if the user brings a single pen into proximity of the surface, without touching the surface, and moves the pen in proximity by a distance greater than a predetermined value (D) from the initial detection point, this activates pen mode. This is represented by the flow sequence of steps 100-102-104-106-108-110-112-132-134. Pen mode is maintained until no pens are detected in step 130.
4. From a condition of one pen detected, where the detected pen has yet to touch the surface, and the mode of operation is not yet set, if the user brings a second pen to the surface, then touch mode is activated. This is represented by the sequence of steps 100-102-114-120-122-126. Touch mode is maintained until no pens are detected in step 130.
5. From a condition of one pen detected where the first pen has yet to touch the surface and the mode is set to pen mode, if the user brings a second pen to the surface, this switches the mode to touch mode until no pens are detected. This is represented by the sequence of steps 100-102-114-120-122-124-126. Pen mode is maintained until no pens are detected in step 130.
6. From a condition of one pen detected where the one pen, or the first pen, is on the surface and the mode is known, if the user brings a second pen to the surface, this maintains a currently selected mode until no pens are detected. This is represented by the sequence of steps 100-102-114-120-122-124-128.

In accordance with the preferred embodiment of Figure 7, in practice, starting with the condition where the interactive whiteboard has detected no pens, a user can implement various modes by taking a predetermined action:
1. A user requiring a touch mode of operation can bring a single pen onto the surface quickly.
2. A user requiring a touch mode of operation using multiple pens, which may be termed multi-touch mode, can bring two pens onto the surface quickly.
3. A user requiring a pen mode, which could also be considered to a so-called hover mode of operation, can hold a single pen motionless in proximity to the surface, without contact, for a short period of time.
4. A user requiring pen mode can move a single pen in proximity to the surface, but not in contact with the surface, for a short distance.

The preferred method of Figure 7 also allows for the possibility of multiple pens to be used in pen mode.

It will be understood by one skilled in the art that Figure 7 illustrates one example of an implementation in accordance with the invention and its embodiments. This example implementation may be modified, or alternative implementations used.

For example, in a further modification to the example of Figure 7, in the condition where a pen is on the surface and the mode is set to touch mode, a condition may occur in which the user lifts the pen off the surface such that it is no longer in contact with the surface, but the pen is kept proximate to the surface such that it is still detected as present by the pen detection circuitry. In the event of such a condition being detected, the mode may be switched to pen mode once a predetermined time period has expired.

In the event that the pen were to be moved to make contact with the surface again before the predetermined time period expired, touch mode would be maintained, and a timer associated with the predetermined time period would be reset.

In the event that the pen is removed from the surface such that the pen can no longer be detected, then the timer associated with the predetermined time period is reset, and the state of the input defined as unknown.

This preferred embodiment of the invention allows a user to continue to provide the operating system of the computer system with data in hover mode of operation from one pen, which is equivalent to the conventional mode of operation of an interactive whiteboard, when in pen mode, but to alternatively provide multi-touch data from one or more pens when in a touch mode of operation, in order to emulate a multi-touch-screen surface connected to the computer system.

Due to the dynamic nature of the mode determination in the preferred embodiment, pen mode and touch mode selection can be interchangeable, such that touch data and mouse data may be interleaved. This is as a natural result of bringing the pen on and off the surface, for example when writing.

For some applications, switching between a touch mode and mouse mode may be problematic. To address this, in an embodiment dynamic switching may be disabled in dependence on the application currently having the input focus.

Thus in an alternative embodiment for determining the mode of operation of the interactive whiteboard driver 54, a look-up table may be provided that lists all applications that require a particular type of input mode, together with the type of mode required. Thus as illustrated in Figure 8 a look-up table 150 may be presented with a column 152 listing various applications, identified for the purpose of example as "application 1" to "application 5" in rows 156a to 156e. A second column 154 lists the mode of operation associated with each application. Thus it can be seen that some applications are listed as being associated with a touch mode, and some applications are associated with a mouse mode.

In operation, in dependence upon a particular application having the current input focus of the computer system or operating system, the processor 22 may access the look-up table 150 to determine whether that application is one having a preferred fixed-mode of operation. In the event that the current application is listed in the column 152, then the associated mode of operation is retrieved from column 154 to determine the mode select signal 55, and the process of Figure 7 may be overruled.

The term 'input focus' is known in the art to refer to the application running on a computer under the control of the operating system which currently has the focus of the operating system. As known in the art, the input focus switches from one application to another as inputs are received which are associated with different applications. In general, an area having the input focus is an area in which a user is currently directing input. Such an area is typically a foreground area - or window - specifically associated with an application.

Applications running on a computer under the control of an operating system can be termed `foreground' applications and 'background' applications, which terms are well-known in the art. A foreground application is an application which currently has the input focus, and is in the foreground of the display, and a background application is one which does not have the input focus, and may or may not be in the background of the display.

As known in the art, as the input focus switches between applications in accordance with the area in which a user is currently directing input changing, inputs to other applications are interrupted or stopped. Only one application can have the input focus at any time, and thus only one application can be the foreground application at any time.

The arrangement of Figure 8 is particularly advantageous for applications where data should be provided in only one mode of operation only. The look-up table 150 may be extended to list all possible applications, and in the mode column 154 to include a further identification of "touch and mouse", such that in the event that an application is selected having such a mode then a process such as illustrated with respect to Figure 7 is implemented.

In general, therefore, the invention provides for inputs from the interactive display surface to be selectively processed as touch data or mouse data. As such, the interactive surface can emulate a touch-sensitive surface, or operate as a conventional interactive surface, in accordance with the control of the selective processing of inputs received from the interactive surface - so-called board data.

It should be noted that in the above description of exemplary embodiments, reference to a mouse input is representative of an input distinct from a touch-sensitive surface input. In general, the computer system is adapted to receive inputs from a touch sensitive surface and one or more further input devices. A mouse is an example of a further input device. Other examples of further input devices include a keyboard, or another interactive surface - such a as a digitiser - connected to provide inputs to the computer system. Similarly the term mouse data is representative of input data provided by a mouse-input, but in more general terms the one or more further inputs provide data in a format which is recognisable by the computer system and/or an operating system associated with the computer system.

The terms 'touch data' and 'mouse data' are known in the art to which the present invention pertains. Particularly, in the field of computer systems having operating systems adapted to receive inputs from a touch-sensitive display surface as well as one or more further inputs devices, such as a mouse. In the art it is well-understood that touch data refers to data provided as input data from a touch-sensitive surface, and mouse data refers to data provided as input data from a mouse. More generally, of course, mouse data is a sub-set of the more general non-touch data (associated with one or more further input devices).

It is also understood in the art of interactive display systems, and particularly electronic whiteboards, that input data delivered by such an interactive surface is referred to as pen data, which data is in conventional systems converted to mouse data by the computer system.

It will be apparent from the foregoing that the invention and its embodiments provides a technique for selectively switching between a pen mode of operation and a touch mode of operation, preferably under the control of a system user. The operating system is not modified, and from the perspective of the operating system there is provided either touch or mouse data in accordance with its conventional configuration.

The invention and its embodiments provide an arrangement in which the user of a multi-input pen based interactive device is able to intuitively provide either mouse inputs or touch inputs to a multi-touch capable operating system without incurring input event sequencing problems.

The methods described herein may be implemented on computer software running on a computer system. The invention may therefore be embodied as a computer program code being executed and over control of a processor of a computer system. The computer program code may be stored on a computer program product. A computer program product may be included in a computer memory, a portable disk, a portable storage memory, or hard disk memory.

The invention is described herein in the context of its application to a computer system connected to an interactive display system. It will be understood by one skilled in the art that the principles of the invention, and embodiments thereof, are not limited to any specific interactive display system. The principles of the invention and its embodiments may be implemented in any interactive display system. The invention and its embodiments are not limited to an electromagnetic interactive whiteboard.

The invention has been described herein by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. A method for controlling a computer system, which computer system is adapted to receive touch data and non-touch data, the method comprising the steps of:
receiving input data from an interactive display surface;
and
selectively delivering the input data from the interactive display surface to an interface of an operating system of the computer system as either touch data or non-touch data.

2. The method of claim 1 wherein the interactive surface includes a wire grid, the method comprising detecting the presence of a pointing device that includes a resonant coil.

3. The method of claim 1 or claim 2 wherein the step of selectively delivering is dependent upon a state of an input means at the interactive display surface.

4. The method of claim 3 when dependent on claim 2, wherein the input means is the pointing device, the state of the input means being defined by either or both of detecting the pointing device as present, and detecting the pointing device as being in contact with the surface.

5. The method of claim 4 wherein if the pointing device is determined as present and being in contact with the surface the input data is delivered as touch data, and if the pointing device is determined as present and not in contact with the surface the input data is delivered as non-touch data.

6. The method of claim 5 wherein the input data is delivered as non-touch data further in dependence on the pointing device being present but not in contact with the surface for either a predetermined period of time, or for a range of movement exceeding a predetermined distance.

7. A computer program for performing, when run on a computer, the method steps of any one of claims 1 to 6.

8. A computer program product for storing computer program code which, when run on a computer, performs the method steps of any one of claims 1 to 6.

9. A computer system adapted to receive touch data and non-touch data, the system being further adapted to receive inputs from an interactive display surface, and selectively deliver the input data from the interactive display surface to an interface of an operating system of the computer system as either touch data or non-touch data.

10. The computer system of claim 9 further adapted to receive inputs from an interactive touch sensitive display surface as touch data and receive inputs from a further input device as non-touch data.

11. The computer system of claim 9 or claim 10 wherein the interactive display surface is adapted to receive data at a non-touch sensitive surface.

12. The computer system of any one of claims 9 to 11 wherein the interactive surface includes a wire grid, for detecting the presence of a pointing device that includes a resonant coil, the computer system further adapted such that the selective delivering is dependent upon a state of an input means at the interactive display surface, wherein the input means is the pointing device, the state of the input means being defined by either or both of detecting the pointing device as present, and detecting the pointing device as being in contact with the surface.

13. The computer system of claim 12 wherein if the pointing device is determined as present and being in contact with the surface the input data is delivered as touch data, and if the pointing device is determined as present and not in contact with the surface the input data is delivered as non-touch data, wherein the input data is delivered as touch data further in dependence on the pointing device contacting the surface within a predetermined period of time.

14. The computer system of claim 12 or claim 13 further adapted such that the selective delivering is dependent upon detecting the presence of a further input means, wherein if on detection of a further input means a selection has been made, that selection is maintained, and if a selection has not been made, the input data is delivered as touch data.

15. The computer system of any one of claims 9 to 14 further adapted such that the selective delivering is dependent on the type of an application running under the control of the computer system and currently having the input focus of the computer system.
